# FASCICULE DE BREVET EUROPEEN

(11) **EP 1 279 874 B1**
(45) Date de publication et mention de la délivrance du brevet: **08.08.2007**
(21) Numéro de dépôt: 02291880.9
(22) Date de dépôt: 25.07.2002
(51) Int. Cl.: F16K 11/085

(54) **Procédé de production d'une vanne melangeuse**
Verfahren zum Herstellen eines Mischventils
Method of producing a mixing valve

(30) Priorité: 25.07.2001 FR 0109895
(43) Date de publication de la demande: 29.01.2003
(73) Titulaire: Somatherm, 24000 Perigueux (FR); Ivar, 25080 Prevalle (IT)
(72) Inventeur: Arbo, Charles, 24750 Champcevinel (FR); Bertolotti, Paolo, c/o Ivar, 25080 Prevalle (IT)
(74) Mandataire: Dronne, Guy

(56) Documents cités:
- DE-A- 2 002 528
- DE-U- 9 006 743
- US-A- 1 849 259
- US-A- 4 901 763
- US-A- 4 972 877

## Description

La présente invention concerne un procédé de production d'une vanne mélangeuse susceptible de recevoir des moyens de commande. Les vannes mélangeuses présentent au moins une entrée et au moins une sortie et sont, notamment mais non exclusivement, destinées à mélanger des fluides de températures différentes pour obtenir un seul fluide de température déterminée. Ces vannes mélangeuses comportent un corps de vanne, généralement obtenu par moulage d'une seule pièce, dans lequel une chambre de mélange de symétrie cylindrique est ménagée. La chambre de mélange présente au moins trois ouvertures correspondant auxdites entrée et sortie et une ouverture axiale à travers laquelle un organe de mélange mobile est susceptible d'être introduit. Cet organe de mélange est prolongé par un arbre d'entraînement en rotation susceptible d'être relié auxdits moyens de commande et il est maintenu dans ladite chambre de mélange au moyen d'une bague d'étanchéité que ledit arbre traverse et qui obture ladite ouverture axiale.

Les moyens de commande, destinés à entraîner en rotation ledit organe de mélange mobile, sont reliés et maintenus en position fixe par rapport audit corps de vanne par l'intermédiaire d'une plaque qui recouvre l'évidement axial et qui est vissée dans son pourtour. Cette plaque, qui présente un perçage central permettant le passage de l'arbre d'entraînement en rotation, permet non seulement de fixer les moyens de commande, mais aussi de maintenir la bague d'étanchéité dans ladite ouverture axiale. Cependant, ladite plaque est également moulée ou matricée indépendamment dudit corps de vanne et présente des perçages pour sa fixation sur ledit corps de vanne et des taraudages pour fixer les moyens de commandes, ce qui nécessite un second moulage ou matriçage et éventuellement un usinage complémentaire de la plaque.

Un procédé selon la première partie de la revendication 1 est connu du DE-GM-9006743.

En outre, Le document DE-A-20025 28 montre un procédé de production d'une vanne mélangeuse susceptible de recevoir des moyens de commande, présentant au moins une entrée et au moins une sortie, et comportant un corps de vanne obtenu par moulage ou matriçage d'une seule pièce dans lequel est ménagée une chambre de mélange de symétrie cylindrique, ladite chambre de mélange présentant au moins trois ouvertures correspondant auxdites entrée[s] et sortie et une ouverture axiale à travers laquelle un organe de mélange mobile est susceptible d'être introduit, ledit organe de mélange mobile, prolongé par un arbre d'entraînement en rotation susceptible d'être relié auxdits moyens de commande, étant maintenu dans ladite chambre de mélange au moyen d'une bague d'étanchéité que ledit arbre d'entraînement en rotation traverse et qui obture ladite ouverture axiale (42),
- on fournit un corps de vanne d'une seule pièce, ledit corps de vanne présentant des portions de paroi externe situées à la jointure des ouvertures dudit corps de vanne correspondant auxdites entrée[s] et sortie;
- on réalise des moyens de fixation desdits moyens de commande et des premiers moyens de liaison pour relier ladite bague d'étanchéité et ledit corps de vanne ; et
- on monte ledit organe de mélange mobile dans ladite chambre de mélange et on maintient en position d'appui ladite bague d'étanchéité avec des deuxièmes moyens de liaison susceptibles de coopérer avec lesdits premiers moyens de liaison.

Un problème qui se pose et que vise à résoudre la présente invention est alors de produire des vannes mélangeuses, qui non seulement permettent de monter les moyens de commandes de façon plus économique mais aussi, dont les moyens de fixation sont parfaitement solidaires dudit corps de vanne et espacés de l'ouverture axiale pour ne pas gêner l'usinage et/ou le montage de ladite vanne mélangeuse.

A cet effet, un premier objet de la présente invention est de proposer un procédé de production d'une vanne mélangeuse comprenant les étapes suivantes : on fournit un corps de vanne en une seule pièce présentant des portions de paroi externe situées à la jointure des ouvertures dudit corps de vanne correspondant auxdites entrée[s] et sortie ; on réalise par usinage dudit corps de vanne, en une seule séquence d'usinage, des moyens de fixation desdits moyens de commande dans lesdites portions de la paroi externe dudit corps de vanne et des premiers moyens de liaison dans le bord de ladite ouverture axiale pour relier ladite bague d'étanchéité et ledit corps de vanne ; et on monte ledit organe de mélange mobile dans ladite chambre de mélange et on maintient en position d'appui ladite bague d'étanchéité contre ledit organe de mélange avec des deuxièmes moyens de liaison susceptibles de coopérer avec lesdits premiers moyens de liaison.

Ainsi, une caractéristique du procédé selon l'invention réside dans la réalisation d'un corps de vanne présentant des portions de paroi externe à la jointure des ouvertures, de sorte que non seulement lesdits moyens de fixation réalisés dans ces portions sont parfaitement solidaires dudit corps de vanne mais aussi que leur position par rapport au corps de vanne permet d'atténuer les angles de dépouille. En outre, les moyens de fixation sont ainsi espacés de l'ouverture axiale et l'usinage et/ou le montage en sont facilités.

De plus, on réalise, en une seule opération, à partir d'un corps de vanne obtenu en une seule pièce, des moyens de fixation des moyens de commande et des premiers moyens de liaison, directement sur ledit corps de vanne.

De la sorte, le corps de vanne est usiné plus rapidement et le montage de la vanne est susceptible d'être effectué avec un nombre d'opérations réduit et sans plaque additionnelle munie de moyens de fixation des moyens de commande, ce qui en diminue les coûts de production.

Avantageusement, lesdites ouvertures sont de symétrie sensiblement circulaire et chaque portion de paroi externe s'étend entre les deux parties de bord, de deux ouvertures, situées les plus proches l'une de l'autre. De la sorte, les portions de paroi externe qui sont parfaitement solidaires du corps de vanne, sont susceptibles de former des moyens de fixation non déformable auxquels les moyens de commande sont aptes à être reliés.

De façon particulièrement avantageuse, lesdites ouvertures sont ménagées de façon que leur axe de symétrie soit situé sensiblement dans un même plan et que lesdites portions de paroi externe soient situées au voisinage dudit même plan. Ainsi, les moyens de fixation sont tous éloignés à une distance maximale de l'ouverture axiale, ce qui facilite l'usinage et le montage de la vanne mélangeuse.

Selon un mode de réalisation préféré, ledit corps de vanne est réalisé d'une seule pièce par matriçage. Ainsi, grâce à ce procédé le corps de vanne est réalisé de façon extrêmement économique. En outre, grâce à la position des portions de paroi externes, à la jointure des ouvertures, et sensiblement dans un même plan, le matriçage est plus aisé à mettre en oeuvre.

Selon un premier mode particulier de mise en oeuvre de l'invention, ladite ouverture axiale présente une première partie débouchant à l'extérieure de ladite chambre de mélange et prolongée par une seconde partie débouchant dans ladite chambre de mélange, et en ce que l'on ménage une rainure circulaire dans la paroi interne de ladite première partie pour réaliser lesdits premiers moyens de liaison et on insère lesdits deuxièmes moyens de liaison, constitués d'un anneau élastique à montage axial dans ladite rainure circulaire de façon qu'une partie dudit anneau élastique débouchant dans ladite ouverture axiale soit susceptible de prendre appui contre le pourtour de ladite bague d'étanchéité insérée dans ladite seconde partie de ladite ouverture axiale et elle-même susceptible d'être en appui contre ledit organe de mélange mobile, pour bloquer en translation, par rapport audit corps de vanne, ladite bague d'étanchéité et ledit organe de mélange mobile.

De la sorte, la bague d'étanchéité qui est mobile uniquement en translation selon l'axe de l'ouverture axiale lorsqu'elle y est engagée, et dans une seule direction lorsqu'elle est en appui contre l'organe de mélange mobile, est susceptible d'être maintenue en position fixe par un anneau élastique qui est monté dans la rainure circulaire de façon simple en pressant tout d'abord les deux branches de l'anneau élastique l'une vers l'autre et en les relâchant au niveau de la rainure pour qu'elle s'y engage. Bien évidemment, ledit anneau dont les branches sont plus larges que la profondeur radiale de la rainure, débouche à l'extérieur dans l'ouverture axiale pour bloquer en translation ladite bague d'étanchéité.

Ce premier mode particulier de mise en oeuvre, permet non seulement de réaliser des premiers et des deuxièmes moyens de liaison à un coût avantageux par rapport aux coûts d'une plaque vissable, mais aussi permet un montage rapide de la vanne mélangeuse.

De façon particulièrement avantageuse, on monte en outre, sur ledit corps de vanne, contre le pourtour de ladite ouverture axiale, une première plaque graduée présentant un perçage central que ledit arbre d'entraînement en rotation traverse librement, et sur ledit arbre d'entraînement en rotation une poignée de manoeuvres indicatrice pour entraîner manuellement ledit arbre d'entraînement en rotation et pour repérer la position dudit arbre d'entraînement en rotation par rapport à ladite première plaque graduée qui est bloquée en rotation par rapport audit corps de vanne. Ainsi, le repérage de la position angulaire de la poignée de manoeuvres par rapport au corps de vanne représente une indication sur la position de l'organe de mélange mobile dans la chambre de mélange et donc sur les proportions des fluides dans le mélange réalisé.

Préférentiellement, ledit corps de vanne comporte des moyens formant ergot situés dans le pourtour de ladite ouverture axiale, et ladite première plaque graduée des moyens formant encoche susceptibles de coopérer avec lesdits moyens formant ergot pour bloquer en rotation ladite première plaque graduée par rapport audit corps de vanne. Ainsi, la plaque graduée dont les moyens formant encoches sont situés à la périphérie, est enfilée sur l'arbre d'entraînement et appliquée sur le bord externe de l'ouverture axiale de façon que les moyens formant ergot s'engagent dans les moyens formant encoche pour bloquer en rotation la plaque graduée par rapport au corps de vanne. En outre, les moyens formant ergot sont susceptibles d'être réalisés lors du moulage ou matriçage du corps de vanne sans autre opération supplémentaire, ce qui permet de fixer la plaque graduée en rotation, également à un coût avantageux par rapport à des systèmes vissés.

Avantageusement, on ménage une gorge sur ledit arbre d'entraînement en rotation entre son extrémité libre et l'intersection d'un plan perpendiculaire audit arbre d'entraînement en rotation coupant sensiblement l'extrémité desdits moyens formant ergot, lorsque ledit organe de mélange mobile est inséré dans ladite chambre de mélange, et en ce qu'on insère dans ladite gorge un anneau élastique à montage radial dont le diamètre est supérieur audit perçage central, après que ladite première plaque graduée a été montée, de façon à prendre appui contre ladite première plaque graduée pour la bloquer en translation. Ainsi, la plaque graduée qui est en appui contre le bord externe de l'ouverture axiale, bloquée latéralement par l'arbre d'entraînement qui la traverse et en rotation par les moyens formant ergot est maintenue en position fixe par un anneau élastique à montage radial qui est solidaire de l'arbre d'entraînement et en appui contre la plaque graduée. Cette caractéristique permet également un montage rapide avec des moyens simples et peut coûteux.

Selon un second mode particulier de mise en oeuvre de l'invention, on réalise des taraudages dans le bord externe de ladite ouverture axiale sensiblement parallèlement à l'axe de ladite ouverture axiale de façon à former lesdits premiers moyens de liaison et en ce que l'on applique un flasque formant lesdits deuxièmes moyens de liaison et présentant un perçage central que ledit arbre d'entraînement en rotation traverse librement, contre ledit bord externe et en appui contre ladite bague d'étanchéité, ledit flasque comportant des perçages au regard desdits taraudages de façon à être maintenu en position fixe par rapport audit corps de vanne par vissage.

Ainsi, selon ce second mode particulier de mise en oeuvre, le flasque qui permet de bloquer en translation la bague d'étanchéité dans l'ouverture axiale, ne comporte pas de moyens de fixation des moyens de commandes, puisque ceux-ci sont réalisés directement dans le corps de vanne et il peut donc être d'une moindre épaisseur et produit simplement.

De façon particulièrement avantageuse, on porte des marques sur ledit flasque pour constituer une seconde plaque graduée et on monte sur ledit arbre d'entraînement en rotation une poignée de manoeuvres indicatrice pour entraîner manuellement ledit arbre d'entraînement en rotation et pour repérer la position dudit arbre d'entraînement en rotation par rapport aux graduations de ladite seconde plaque graduée. Ainsi, le flasque constitue à la fois un moyen pour maintenir en position d'appui la bague d'étanchéité et un moyen support des marques de graduations pour repérer la position de la poignée de manoeuvres indicatrice.

Selon une caractéristique particulière, on réalise, dans ladite plaque graduée, un évidement selon un arc de cercle centré sur ledit perçage central et ladite poignée de manoeuvres indicatrice comporte un ergot formant butée susceptible d'être engagé dans ledit évidement de façon à limiter le déplacement en rotation de ladite poignée entre deux positions extrêmes correspondant sensiblement aux deux positions extrêmes de l'échelle graduée de ladite plaque graduée. Ainsi, l'organe de mélange mobile qui doit, généralement, être actionné en rotation avec un angle maximal de 180° et plus particulièrement de 45° pour les vannes mélangeuses à deux entrées et deux sorties, est bloqué en rotation au delà de ces limites par l'intermédiaire de la poignée de manoeuvres indicatrice dont l'ergot est susceptible d'évoluer dans les limites de l'évidement. Bien évidemment, la poignée de manoeuvres est solidaire en rotation, de l'arbre d'entraînement.

Selon une caractéristique particulièrement avantageuse, ladite bague d'étanchéité comporte une armature solide de symétrie circulaire présentant une paroi latérale externe, des premiers moyens formant rainure externe dans lesquels un premier joint torique est susceptible d'être inséré et des seconds moyens formant rainure interne dans lesquels au moins un deuxième joint torique est susceptible d'être inséré pour prendre appui contre ledit arbre d'entraînement, ladite armature présentant un évidement circulaire débouchant dans la paroi latérale externe et dans lesdits seconds moyens formant rainure de façon à former un espace libre entre ledit deuxième joint torique et l'extérieur de ladite chambre de mélange. De la sorte, le joint torique est accessible depuis l'extérieur de la vanne mélangeuse sans démontage complet de cette dernière, et ainsi, il est susceptible d'être remplacé aisément en cas de fuite.

Selon un deuxième objet, la présente invention propose une vanne mélangeuse, comprenant un servomoteur monté sur lesdits moyens de fixation desdits moyens de commande pour entraîner en rotation ledit arbre d'entraînement en rotation.

Selon encore un autre objet, la présente invention propose une installation de circulation d'un fluide caloporteur, comprenant une vanne mélangeuse produite selon le procédé de production conforme à l'invention.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue de dessus en élévation d'une vanne mélangeuse conforme à un premier mode de réalisation de l'invention présentant deux entrées et deux sorties ;
- la Figure 2, est une section selon le plan II-II de la Figure 1 ; et,
- la Figure 3 est une vue en demi-coupe verticale selon le plan III-III représenté sur la Figure 1 de la vanne mélangeuse montée.

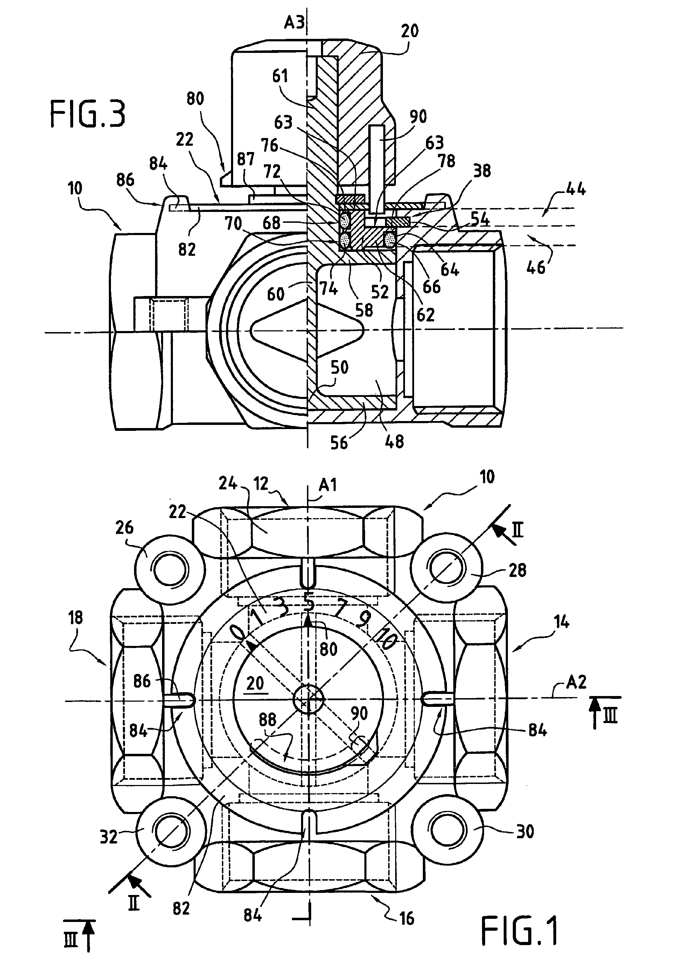

La Figure 1 montre une vanne mélangeuse comportant un corps de vanne 10 muni d'une poignée de manoeuvres indicatrice 20 au regard d'une échelle graduée 22 de 0 à 10, et des entrées ou sorties matérialisées par les ouvertures 12, 14, 16 et 18. Les ouvertures 12, 14, 16 et 18, de symétrie circulaire, sont deux à deux, situées dans le prolongement l'une de l'autre selon un même axe et les deux axes, A1 et A2 qu'elles forment sont perpendiculaires entre eux et sécants. Les bords externes de ces ouvertures présentent des moyens 24 formant écrou destinés à immobiliser la vanne mélangeuse au moyen d'une clé lorsque l'on monte par vissage une canalisation sur l'ouverture.

La Figure 1 illustre également des moyens de fixation 26, 28, 30, 32, des moyens de commande situés sensiblement dans un même plan parallèle au plan défini par les deux axes A1 et A2, chacun à la jointure de deux ouvertures contiguës.

Un premier objet de la présente invention est de proposer un procédé de production de vanne mélangeuse, telle que représentée sur la Figure 1, qui permet de diminuer le temps et les moyens de mise en oeuvre par rapport aux procédés de l'art antérieur pour réduire le coût de la vanne mélangeuse.

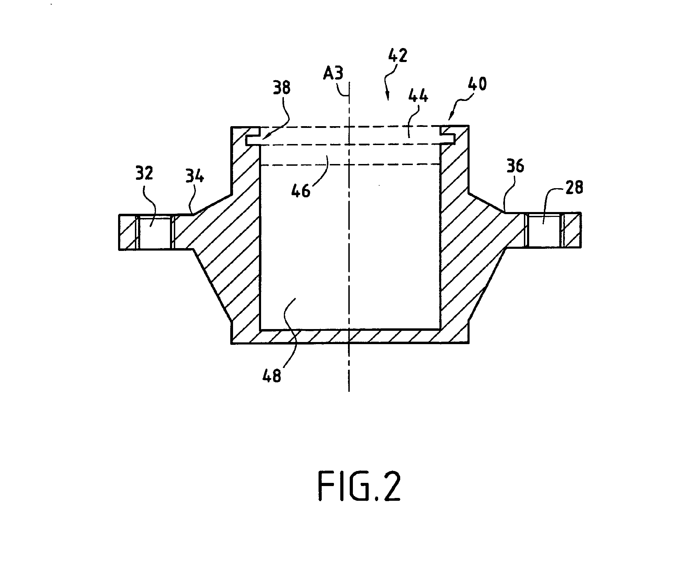

Ainsi, en se référant tout d'abord à la Figure 2 on décrira une première étape du procédé de production, et ensuite, par rapport à la Figure 3 on décrira le mode de montage de la vanne mélangeuse.

La Figure 2 illustre le corps de vanne 10 selon la section II-II. Le corps de vanne 10 est initialement susceptible d'être obtenu par moulage mais il est préférentiellement réalisé par matriçage. Ensuite, il est usiné au moyen d'une machine-outil multi-axes, de façon à réaliser à la fois les moyens de fixation 28, 32 des moyens de commande dans des portions 34, 36 de paroi externe spécialement prévus à cet effet et des premiers moyens de liaison 38 dans le bord 40 d'une ouverture axiale 42 d'axe A3. L'ouverture axiale 42 est constituée d'une première partie 44 au niveau de laquelle sont ménagés les premiers moyens de liaison 38 sous forme d'une rainure circulaire dans la paroi interne de l'ouverture 42 et d'une seconde partie 46 qui la prolonge et qui débouche dans une chambre de mélange 48. La forme de cette seconde partie 46, ne se distingue pas particulièrement par rapport à celle de la chambre de mélange 48, mais, comme on l'expliquera plus en détails dans la suite de la description elle n'en fait pas partie et permet de loger des moyens d'étanchéité.

Les portions 34, 36 de paroi externe sont définies par la forme du moule ou de l'outillage dans lequel le matériau du corps de vanne est introduit à chaud, et elles sont situées à la jointure des ouvertures du corps de vanne, entre les ouvertures 12 et 14 pour la portion 36 et 16 et 18 pour la portion 34.

Plus précisément, les portions de paroi externe, 36, 34 par exemple, s'étendent entre deux ouvertures, respectivement 12 et 14, 16 et 18, en reliant entre elles, respectivement, les deux parties de bord desdites ouvertures les plus proches l'une de l'autre.

Les moyens de fixation 28, 32 des moyens de commande sont réalisés en formant des taraudages dans lesdites portions 34, 36, sensiblement parallèlement à l'axe A3. Ainsi, des moyens de commande, non représentés tels qu'un servomoteur, sont susceptibles d'être maintenus en position fixe par rapport au corps de vanne par vissage à travers lesdits taraudages.

On comprend que dans cette première étape, on réalise également, de la même façon, les moyens de fixation 26, 30 représentés sur la Figure 1, que la section de la Figure 2 ne peut montrer. Ces moyens de fixation 26, 30 sont ménagés dans les portions de paroi externe situées respectivement entre les ouvertures 18 et 12 et entre les ouvertures 14 et 16, lesquelles joignent également respectivement les parties de bord les plus proches entre elles. Ainsi, les axes de symétrie A1, A2 des ouvertures 12, 16 et 14, 18 étant sensiblement contenues dans un même plan, les portions de paroi externe définissent également un plan sensiblement parallèle audit même plan. Les deux plans sont susceptibles d'être confondus ou situés à proximité l'un de l'autre et divisent ledit corps de vanne en deux portions sensiblement symétriques. De la sorte, l'opération de matriçage est rendue plus aisée car les portions de paroi externe, qui font sensiblement saillie dudit corps de vanne 10, sont situées au voisinage du plan de joint.

En outre, on comprend que la chambre de mélange 48 et l'ouverture axiale 42 qui la prolonge sont de symétrie cylindrique d'axe commun A3. Ainsi, comme on va l'expliquer en référence à la Figure 3, un organe de mélange mobile introduit dans la chambre de mélange 48 est susceptible d'y être entraîné en rotation selon l'axe A3.

La Figure 3 illustre la vanne mélangeuse montée, un organe de mélange mobile 50 étant maintenue dans la chambre de mélange 48 par une bague d'étanchéité 52, elle-même en appui contre des deuxièmes moyens de liaison 54.

La vanne mélangeuse, représentée sur la Figure 3, selon un premier mode de réalisation, comporte un organe de mélange mobile 50 dont la base 56 et la partie supérieure 58 forment deux disques parallèles en regard l'un de l'autre et maintenus ensemble par une paroi verticale 60. Cette paroi verticale 60 contient l'axe A3 de la chambre de mélange et ses bords latéraux sont en contact avec la paroi cylindrique de la chambre de mélange 48, tout comme les bords des deux disques parallèles en regard. Ainsi, la chambre de mélange est divisée en deux demi-cylindres de même volume et séparés de façon sensiblement hermétique par la paroi verticale 60.

L'organe de mélange mobile 50, qui est prolongé par un arbre d'entraînement en rotation 61, est maintenu, dans la chambre de mélange 48, la base 56 en appui dans le fond de la chambre, par la bague d'étanchéité 52 qui est appliquée contre la partie supérieure 58 dans la seconde partie 46 de l'ouverture axiale 42. La bague d'étanchéité 52 est constituée d'une armature solide circulaire 62 présentant une paroi latérale externe 63, une rainure externe 64 dans laquelle est inséré un joint torique externe 66 et deux rainures internes 68, 70 dans lesquelles sont insérés deux joints toriques internes 72, 74.

L'armature 62 présente un évidement circulaire 76 débouchant dans la paroi latérale externe 63 et dans la rainure interne 68. De la sorte, le joint torique interne 72 qui assure l'étanchéité entre l'arbre d'entraînement 61 et l'armature solide circulaire 62 est directement accessible, ce qui permet de le remplacer lorsqu'il est défectueux.

Afin de bloquer en translation la bague d'étanchéité pour la maintenir en appui contre la partie supérieure 58 de l'organe de mélange mobile 50, on insère dans la rainure circulaire 38 les seconds moyens de liaison 54 formés d'un anneau élastique à montage axial. Ce dernier, bloqué en translation selon l'axe de symétrie A3 par la rainure 38, présente une partie circulaire interne 78 qui vient en appui contre le pourtour de la paroi latérale externe 63 de la bague d'étanchéité 52 et bloque cette dernière en translation selon l'axe A3.

Ainsi, la bague d'étanchéité 52, maintenue en position fixe par rapport au corps de vanne 10, au moins en translation, permet d'isoler la chambre de mélange 48 de l'extérieur et d'assurer l'étanchéité de la vanne mélangeuse. De la sorte, l'organe de mélange mobile 50 est susceptible d'être entraîné en rotation par l'intermédiaire de l'arbre d'entraînement 61 qui le prolonge et qui est situé à l'extérieur de la chambre de mélange 48.

La poignée de manoeuvres indicatrice 20, liée en rotation avec l'arbre d'entraînement 61, présente un repère 80 situé au regard de l'échelle graduée 22 qui est marquée sur une plaque 82. Cette dernière, percée au centre pour permettre le passage de l'arbre d'entraînement en rotation 61, présente des encoches périphériques 84 que l'on retrouve sur la vue de dessus de la Figure 1 et dans lesquelles des ergots 86 solidaires du corps de vanne 10 viennent s'encastrer pour la bloquer en rotation.

La plaque 82 est bloquée en translation au moyen de l'arbre d'entraînement en rotation 61 qui la traverse librement. Pour ce faire, on ménage une gorge dans l'arbre d'entraînement 61, au-dessus de l'intersection du plan moyen de la plaque 82 et de l'arbre 61, de façon à pouvoir insérer un anneau élastique 87 à montage radial dont le diamètre est supérieur au perçage central de la plaque 82 et qui prend appui sur cette dernière. De la sorte, la plaque 82 est bloquée entre le corps de vanne 10 et l'anneau élastique 87. Ainsi, la plaque 82 est-elle montée aisément sur la vanne mélangeuse sans manipulation excessive.

En outre, la plaque 82 présente un évidement 88 en forme d'arc dans lequel est engagé un ergot ou doigt 90 solidaire de la poignée de manoeuvres indicatrice 20, que l'on retrouve illustré sur la Figure 3 et qui permet de limiter la rotation de l'organe mobile de mélange 50 entre les deux extrémités de l'évidement 88. Ces deux positions extrêmes correspondent sensiblement aux deux extrémités 0 et 10 de l'échelle graduée 22 au regard de laquelle le repère 80 de la poignée de manoeuvres indicatrice 20 est susceptible d'évoluer.

Selon un mode particulier de mise en oeuvre de l'invention, non représenté, on bloque en translation la bague d'étanchéité contre l'organe de mélange mobile au moyen d'un flasque présentant un perçage central pour le passage de l'arbre d'entraînement et qui est vissé dans le bord externe de l'ouverture axiale. A cet effet, on réalise des taraudages dans le bord externe de l'ouverture axiale lors de l'usinage des moyens de fixation desdits moyens de commande.

Un autre objet de la présente invention, non représenté, concerne une vanne mélangeuse obtenue par le procédé conforme au premier objet de l'invention sur laquelle est montée un servomoteur maintenu en position fixe par les moyens de fixation desdits moyens de commande pour entraîner en rotation ledit arbre d'entraînement. Bien entendu, l'extrémité libre de l'arbre d'entraînement comporte des aménagements afin de le relier au servomoteur et dans un mode particulier de mise en oeuvre, la poignée de manoeuvre indicatrice est conservée de façon à indiquer la position de l'organe de mélange mobile et à pallier, éventuellement, les conséquences d'une panne du servomoteur.

Selon encore un autre objet non représenté, la présente invention concerne une installation de circulation d'un fluide caloporteur, dans laquelle est intégrée une vanne mélangeuse produite selon le premier objet de l'invention.

## Revendications

1. Procédé de production d'une vanne mélangeuse susceptible de recevoir des moyens de commande, présentant au moins une entrée et au moins une sortie, et comportant un corps de vanne (10) obtenu par moulage ou matriçage d'une seule pièce dans lequel est ménagée une chambre de mélange (48) de symétrie cylindrique, ladite chambre de mélange (48) présentant au moins trois ouvertures correspondant auxdites entrée[s] et sortie et une ouverture axiale (42) à travers laquelle un organe de mélange mobile (50) est susceptible d'être introduit, ledit organe de mélange mobile (50), prolongé par un arbre d'entraînement en rotation (61) susceptible d'être relié auxdits moyens de commande, étant maintenu dans ladite chambre de mélange (48) au moyen d'une bague d'étanchéité (52) que ledit arbre d'entraînement en rotation (61) traverse et qui obture ladite ouverture axiale (42), comportant les étapes suivantes:
- on fournit un corps de vanne (10) d'une seule pièce ledit corps de vanne présentant des portions de paroi externe situées à la jointure des ouvertures dudit corps de vanne correspondant auxdites entrée[s] et sortie; et on monte ledit organe de mélange mobile (50) dans ladite chambre de mélange (48), **caractérisé en ce qu'**il comporte en outre les étapes suivantes :
- on réalise, par usinage dudit corps de vanne (10) en une seule séquence d'usinage, des moyens de fixation (26, 28, 30, 32) desdits moyens de commande dans lesdites portions de la paroi externe dudit corps de vanne (10) et des premiers moyens de liaison (38) dans le bord (40) de ladite ouverture axiale (42) pour relier ladite bague d'étanchéité (52) et ledit corps de vanne (10) ; et
- on maintient en position d'appui ladite bague d'étanchéité (52) contre ledit organe de mélange mobile (50) avec des deuxièmes moyens de liaison (54) susceptibles de coopérer avec lesdits premiers moyens de liaison (38).

2. Procédé de production d'une vanne mélangeuse selon la revendication 1, **caractérisé en ce que** lesdites ouvertures sont de symétrie sensiblement circulaire et **en ce que** chaque portion de paroi externe s'étend entre les deux parties de bord, de deux ouvertures, situées les plus proches l'une de l'autre.

3. Procédé de production d'une vanne mélangeuse selon la revendication 1 ou 2, **caractérisé en ce que** lesdites ouvertures sont ménagées de façon que leur axe de symétrie soit situé sensiblement dans un même plan et **en ce que** lesdites portions de paroi externe soient situées au voisinage dudit même plan.

4. Procédé de production d'une vanne mélangeuse selon l'une quelconque des revendications 1 à 3, **caractérisé en ce que** ledit corps de vanne est réalisé d'une seule pièce par matriçage

5. Procédé de production d'une vanne mélangeuse selon l'une quelconque des revendications 1 à 4, **caractérisé en ce que** ladite ouverture axiale (42) présente une première partie (44) débouchant à l'extérieure de ladite chambre de mélange (48) prolongée par une seconde partie (46) débouchant dans ladite chambre de mélange, et **en ce que** l'on ménage une rainure circulaire (38) dans la paroi interne de ladite première partie (44) pour réaliser lesdits premiers moyens de liaison (38) et on insère lesdits deuxièmes moyens de liaison (54), constitués d'un anneau élastique à montage axial dans ladite rainure circulaire (38) de façon qu'une partie dudit anneau élastique (54) débouchant dans ladite ouverture axiale (42) soit susceptible de prendre appui contre le pourtour de ladite bague d'étanchéité (52) insérée dans ladite seconde partie (46) de ladite ouverture axiale (42) et elle-même susceptible d'être en appui contre ledit organe de mélange mobile (50), pour bloquer en translation, par rapport audit corps de vanne (10), ladite bague d'étanchéité (52) et ledit organe de mélange mobile (50).

6. Procédé de production d'une vanne mélangeuse selon l'une quelconque des revendications 1 à 5, **caractérisé en ce qu'**en outre, on monte sur ledit corps de vanne (10), contre le pourtour de ladite ouverture axiale (42), une première plaque (82) graduée présentant un perçage central que ledit arbre d'entraînement en rotation (61) traverse librement, et sur ledit arbre d'entraînement en rotation (61) une poignée de manoeuvres indicatrice (20) pour entraîner manuellement ledit arbre d'entraînement en rotation (61) et pour repérer la position dudit arbre d'entraînement en rotation (61) par rapport à ladite première plaque (82) graduée qui est bloquée en rotation par rapport audit corps de vanne (10).

7. Procédé de production d'une vanne mélangeuse selon la revendication 6, **caractérisé en ce qu'**en outre, ledit corps de vanne (10) comporte des moyens formant ergot (86) situés dans le pourtour de ladite ouverture axiale (42), et ladite première plaque (82) graduée des moyens formant encoche (84) susceptibles de coopérer avec lesdits moyens formant ergot (86) pour bloquer en rotation ladite première plaque (82) graduée par rapport audit corps de vanne (10).

8. Procédé de production d'une vanne mélangeuse selon la revendication 7, **caractérisé en ce qu'**on ménage une gorge sur ledit arbre d'entraînement en rotation (61) entre son extrémité libre et l'intersection d'un plan perpendiculaire audit arbre d'entraînement en rotation (61) coupant sensiblement l'extrémité desdits moyens formant ergot (86), lorsque ledit organe de mélange mobile (50) est inséré dans ladite chambre de mélange (48), et **en ce qu'**on insère dans ladite gorge un anneau élastique (87) à montage radial dont le diamètre est supérieur audit perçage central, après que ladite première plaque (82) graduée a été montée, de façon à prendre appui contre ladite première plaque (82) graduée pour la bloquer en translation.

9. Procédé de production d'une vanne mélangeuse selon l'une quelconque des revendications 1 à 4, **caractérisé en ce qu'**on réalise des taraudages dans le bord externe de ladite ouverture axiale (42) sensiblement parallèlement à l'axe de ladite ouverture axiale (42) de façon à former lesdits premiers moyens de liaison et **en ce que** l'on applique un flasque formant lesdits deuxièmes moyens de liaison et présentant un perçage central que ledit arbre d'entraînement en rotation traverse librement, contre ledit bord externe et en appui contre ladite bague d'étanchéité (52), ledit flasque comportant des perçages au regard desdits taraudages de façon à être maintenu en position fixe par rapport audit corps de vanne (10) par vissage.

10. Procédé de production d'une vanne mélangeuse selon la revendication 9, **caractérisé en ce qu'**on porte des marques sur ledit flasque pour constituer une seconde plaque graduée et **en ce qu'**on monte sur ledit arbre d'entraînement en rotation (61) une poignée de manoeuvres (20) indicatrice pour entraîner manuellement ledit arbre d'entraînement en rotation et pour repérer la position dudit arbre d'entraînement en rotation par rapport aux graduations de ladite seconde plaque graduée.

11. Procédé de production d'une vanne mélangeuse selon l'une quelconque des revendications 6 à 8 et 10, **caractérisé en ce qu'**on réalise, dans ladite plaque (82) graduée, un évidement (88) selon un arc de cercle centré sur ledit perçage central et **en ce que** ladite poignée de manoeuvres (20) indicatrice comporte un ergot (90) formant butée susceptible d'être engagé dans ledit évidement (88) de façon à limiter le déplacement en rotation de ladite poignée de manoeuvres (20) entre deux positions extrêmes correspondant sensiblement aux deux positions extrêmes de l'échelle graduée (22) de ladite plaque (82) graduée.

12. Procédé de production d'une vanne mélangeuse selon l'une quelconque des revendications 1 à 11, **caractérisé en ce que** ladite bague d'étanchéité (52) comporte une armature solide (62) de symétrie circulaire présentant une paroi latérale externe (63), des premiers moyens formant rainure externe (64) dans lesquels un premier joint torique (66) est susceptible d'être inséré et des seconds moyens formant rainure interne (68, 70) dans lesquels au moins un deuxième joint torique (72, 74) est susceptible d'être inséré pour prendre appui contre ledit arbre d'entraînement (61), ladite armature solide (62) présentant un évidement circulaire (76) débouchant dans la paroi latérale externe (63) et dans lesdits seconds moyens formant rainure (68) de façon à former un espace libre entre ledit deuxième joint torique (72, 74) et l'extérieur de ladite chambre de mélange (48).

13. Vanne mélangeuse obtenue par un procédé selon l'une quelconque des revendications 1 à 12, **caractérisée en ce qu'**elle comprend un servomoteur monté sur lesdits moyens de fixation (26, 28, 30, 32) desdits moyens de commande pour entraîner en rotation ledit arbre d'entraînement en rotation (61).

14. Installation de circulation d'un fluide caloporteur, **caractérisée en ce qu'**elle comprend une vanne mélangeuse selon la revendication 13.

## Claims

1. Method for producing a mixer valve capable of receiving control means, having at least one inlet and at least one outlet, and comprising a valve body (10) obtained by moulding or drop forging a single piece in which a mixing chamber (48) of cylindrical symmetry is arranged, the said mixing chamber (48) having at least three apertures corresponding to the said inlet(s) and outlet and an axial aperture (42) through which a movable mixing member (50) is capable of being inserted, the said movable mixing member (50), extended by a rotary drive shaft (61) capable of being connected to the said control means, being held in the said mixing chamber (48) by means of a sealing ring (52) that the said rotary drive shaft (61) passes through and that blocks off the said axial aperture (42), comprising the following steps:
- a one-piece valve body (10) is provided, the said valve body having external wall portions situated at the joining of the apertures of the said valve body corresponding to the said inlet(s) and outlet; and the said movable mixing member (50) is installed in the said mixing chamber (48), **characterized in that** it also comprises the following steps:
- by machining the said valve body (10) in a single machining sequence, means (26, 28, 30, 32) for attaching the said control means in the said external wall portions of the said valve body (10) and first connection means (38) in the edge (40) of the said axial aperture (42) are made in order to connect the said sealing ring (52) and the said valve body (10); and
- the said sealing ring (52) is held in position bearing against the said movable mixing member (50) with second connection means (54) capable of interacting with the said first connection means (38).

2. Method for producing a mixer valve according to Claim 1, **characterized in that** the said apertures are of substantially circular symmetry and **in that** each external wall portion extends between the two edge portions, of two apertures, situated closest to one another.

3. Method for producing a mixer valve according to Claim 1 or 2, **characterized in that** the said apertures are made so that their axis of symmetry is situated substantially in the same plane and **in that** the said external wall portions are situated in the vicinity of the said same plane.

4. Method for producing a mixer valve according to any one of Claims 1 to 3, **characterized in that** the said valve body is made in a single piece by drop forging.

5. Method for producing a mixer valve according to any one of Claims 1 to 4, **characterized in that** the said axial aperture (42) has a first portion (44) opening onto the outside of the said mixing chamber (48) extended by a second portion (46) opening into the said mixing chamber, and **in that** a circular groove (38) is made in the internal wall of the said first portion (44) in order to produce the said first connection means (38) and the said second connection means (54), consisting of an elastic ring mounted axially in the said circular groove (38), are inserted so that a portion of the said elastic ring (54) opening into the said axial aperture (42) is capable of bearing against the periphery of the said sealing ring (52) inserted into the said second portion (46) of the said axial aperture (42) and itself capable of bearing against the said movable mixing member (50), in order to immobilize in translation, relative to the said valve body (10), the said sealing ring (52) and the said movable mixing member (50).

6. Method for producing a mixer valve according to any one of Claims 1 to 5, **characterized in that**, in addition, mounted on the said valve body (10), against the periphery of the said axial aperture (42), is a first graduated plate (82) having a central drill hole which the said rotary drive shaft (61) passes through freely and on the said rotary drive shaft (61) is an indicator operating handle (20) for manually operating the said rotary drive shaft (61) and for marking the position of the said rotary drive shaft (61) relative to the said first graduated plate (82) that is immobilized in rotation relative to the said valve body (10).

7. Method for producing a mixer valve according to Claim 6, **characterized in that**, in addition, the said valve body (10) comprises means forming a lug (86) situated in the periphery of the said axial aperture (42), and the said first graduated plate (82) of the means forming a notch (84) capable of interacting with the said means forming a lug (86) in order to immobilize the said first graduated plate (82) in rotation relative to the said valve body (10).

8. Method for producing a mixer valve according to Claim 7, **characterized in that** a hollow is made on the said rotary drive shaft (61) between its free end and the intersection of a plane perpendicular to the said rotary drive shaft (61) substantially intersecting the end of the said means forming a lug (86), when the said movable mixing member (50) is inserted into the said mixing chamber (48), and **in that** inserted into the said hollow is an elastic, radially mounted ring (87) whose diameter is greater than the said central drill hole, after the said first graduated plate (82) has been installed, so as to bear against the said first graduated plate (82) in order to immobilize it in translation.

9. Method for producing a mixer valve according to any one of Claims 1 to 4, **characterized in that** tappings are made in the external edge of the said axial aperture (42) substantially parallel to the axis of the said axial aperture (42) in order to form the said first connection means and **in that** an end-piece forming the said second connection means and having a central drill hole that the said rotary drive shaft passes through freely is pressed against the said external edge and is bearing against the said sealing ring (52), the said end-piece comprising drill holes opposite to the said tappings in order to be held in a fixed position relative to the said valve body (10) by screwing.

10. Method for producing a mixer valve according to Claim 9, **characterized in that** marks are placed on the said end-piece in order to form a second graduated plate, and **in that** on the said rotary drive shaft (61) is mounted an indicator operating handle (20) in order to manually operate the said rotary drive shaft and in order to mark the position of the said rotary drive shaft relative to the graduations of the said second graduated plate.

11. Method for producing a mixer valve according to any one of Claims 6 to 8 and 10, **characterized in that**, in the said graduated plate (82), a recess (88) is made in an arc of a circle centred on the said central drill hole and **in that** the said indicator operating handle (20) comprises a lug (90) forming a stop capable of being engaged in the said recess (88) in order to limit the rotary movement of the said operating handle (20) between two extreme positions corresponding substantially to the two extreme positions of the graduated scale (22) of the said graduated plate (82).

12. Method for producing a mixer valve according to any one of Claims 1 to 11, **characterized in that** the said sealing ring (52) comprises a solid framework (62) of circular symmetry having an external lateral wall (63), first means forming an external groove (64) in which a first 0-ring (66) is capable of being inserted and second means forming an internal groove (68, 70) in which at least a second O-ring (72, 74) is capable of being inserted to bear against the said drive shaft (61), the said solid framework (62) having a circular recess (76) opening into the external lateral wall (63) and into the said second means forming a groove (68) in order to form a free space between the said second 0-ring (72, 74) and the outside of the said mixing chamber (48).

13. Mixer valve obtained by a method according to any one of Claims 1 to 12, **characterized in that** it comprises a servomotor mounted on the said attachment means (26, 28, 30, 32) of the said control means in order to rotate the said rotary drive shaft (61).

14. Heat-bearing fluid circulation installation, **characterized in that** it comprises a mixer valve according to Claim 13.

## Patentansprüche

1. Verfahren zum Herstellen eines Mischventils, das Steuermittel aufnehmen kann, die mindestens einen Eingang und mindestens einen Ausgang aufweisen und einen Ventilkörper (10) umfassen, der durch Formguß und Prägen aus einem einzigen Stück erhalten wird, in dem eine Mischkammer (48) von zylindrischer Symmetrie vorgesehen ist, wobei die Mischkammer (48) mindestens drei Öffnungen, die den Ein- und Ausgängen entsprechen, und eine Axialöffnung (42) aufweist, durch die ein bewegliches Mischelement (50) eingeführt werden kann, wobei das bewegliche Mischelement (50), das durch eine Drehantriebswelle (61) verlängert ist, mit den Steuermitteln verbunden werden kann, wobei es in der Mischkammer (48) mit Hilfe eines Dichtringes (52) gehalten wird, den die Drehantriebswelle (61) durchquert und der die Axialöffnung (42) verschließt, umfassend die folgenden Schritte:
Bereitstellen eines Ventilkörpers (10) aus einem Stück, wobei der Ventilkörper äußere Wandabschnitte aufweist, die sich an der Verbindung der Öffnungen des entsprechenden Ventilkörpers mit den Ein- und Ausgängen befinden, und
- Befestigen des beweglichen Mischelements (50) in der Mischkammer (48), **dadurch gekennzeichnet, daß** es ferner die folgenden Schritte umfaßt:
- durch Bearbeiten des Ventilkörpers (10) in einer Bearbeitungssequenz Herstellen der Mittel (26, 28, 30, 32) zur Befestigung der Steuermittel in den äußeren Wandabschnitten des Ventilkörpers (10) und der ersten Verbindungsmittel (38) im Rand (40) der Axialöffnung (42), um den Dichtring (52) und den Ventilkörper (10) zu verbinden und
- Halten des Dichtringes (52) in der Abstützungsposition an dem beweglichen Mischelement (50) mit zweiten Verbindungsmitteln (54), die mit den ersten Verbindungsmitteln (38) zusammenwirken können.

2. Verfahren zum Herstellen eines Mischventils nach Anspruch 1, **dadurch gekennzeichnet, daß** die Öffnungen eine im Wesentlichen kreisförmige Symmetrie haben, und daß sich jeder äußere Wandabschnitt zwischen den beiden Randteilen zweier Öffnungen, die sich am nächsten zueinander befinden, erstreckt.

3. Verfahren zum Herstellen eines Mischventils nach Anspruch 1 oder 2, **dadurch gekennzeichnet, daß** die Öffnungen derart vorgesehen sind, daß sich ihre Symmetrieachse im Wesentlichen in derselben Ebene befindet, und daß die äußeren Wandabschnitte in der Nähe derselben Ebene angeordnet sind.

4. Verfahren zum Herstellen eines Mischventils nach einem der Ansprüche 1 bis 3, **dadurch gekennzeichnet, daß** der Ventilkörper aus einem Stück durch Prägen hergestellt ist.

5. Verfahren zum Herstellen eines Ventilkörpers nach einem der Ansprüche 1 bis 4, **dadurch gekennzeichnet, daß** die Axialöffnung (42) einen ersten Teil (44) aufweist, der außerhalb der Mischkammer (48) mündet und durch einen zweiten Teil (46) verlängert ist, der in die Mischkammer mündet, und daß eine kreisförmige Nut (38) in der Innenwand des ersten Teils (44) vorgesehen ist, um die ersten Verbindungsmittel (38) zu verwirklichen, und die zweiten Verbindungsmittel (54), die von einem elastischen Ring gebildet sind, durch axiale Montage in die kreisförmige Nut (38) eingesetzt werden, so daß ein Teil des elastischen Ringes (54), der in die Axialöffnung (42) mündet, am Umfang des Dichtringes (52) aufliegen kann, der in den zweiten Teil (46) der Axialöffnung (42) eingesetzt ist und selbst an dem beweglichen Mischelement (50) zur Anlage kommen kann, um den Dichtring (52) und das bewegliche Mischelement (50) in Translation in Bezug auf den Ventilkörper (10) festzustellen.

6. Verfahren zum Herstellen eines Mischventils nach einem der Ansprüche 1 bis 5, **dadurch gekennzeichnet, daß** ferner auf dem Ventilkörper (10) gegen den Umfang der Axialöffnung (42) eine erste Platte (82) mit Gradteilung montiert wird, die eine Mittelbohrung, die die Drehantriebswelle (61) frei durchquert, und auf der Drehantriebswelle (61) einen Betätigungsgriff mit Anzeige (20) aufweist, um die Drehantriebswelle (61) manuell einzustellen und die Position der Drehantriebswelle (61) in Bezug zur ersten Platte (82) mit Gradteilung zu erfassen, welche in Bezug zum Ventilkörper (10) drehfest gestellt ist.

7. Verfahren zum Herstellen eines Mischventils nach Anspruch 6, **dadurch gekennzeichnet, daß** ferner der Ventilkörper (10) einen Haken bildende Mittel (86), die sich im Umfang der Axialöffnung (42) befinden, und die erste Platte (82) mit Gradteilung der einen Haken bildenden Mittel (84) umfaßt, die mit den einen Haken bildenden Mitteln (86) zusammenwirken können, um die erste Platte (82) mit Gradteilung in Bezug zum Ventilkörper (10) drehfest zu stellen.

8. Verfahren zum Herstellen eines Mischventils nach Anspruch 7, **dadurch gekennzeichnet, daß** eine Rille auf der Drehantriebswelle (61) zwischen ihrem freien Ende und dem Schnittpunkt einer auf die Drehantriebswelle (61) senkrechten Ebene, die im Wesentlichen das Ende der einen haken bildenden Mittel (86) schneidet, ausgespart wird, wenn das bewegliche Mischelement (50) in die Mischkammer (48) eingesetzt wird, und daß in die Rille ein elastischer Ring (87) in radialer Montage eingesetzt wird, dessen Durchmesser größer als die Mittelbohrung ist, nachdem die erste Platte (82) mit Gradteilung montiert wurde, um an der ersten Platte (82) mit Gradteilung anzuliegen, um sie in Translation festzustellen.

9. Verfahren zum Herstellen eines Mischventils nach einem der Ansprüche 1 bis 4, **dadurch gekennzeichnet, daß** Gewinde im äußeren Rand der Axialöffnung (42) im Wesentlichen parallel zur Achse der Axialöffnung (42) verwirklicht werden, um die ersten Verbindungsmittel zu bilden, und daß ein Flansch, der die zweiten Verbindungsmittel bildet und eine Mittelbohrung aufweist, die die Drehantriebswelle frei durchquert, an den äußeren Rand und den Dichtring (52) angelegt wird, wobei der Flansch Bohrungen gegenüber den Gewinden umfaßt, um in fester Position in Bezug zu dem Ventilkörper (10) durch Verschrauben gehalten zu werden.

10. Verfahren zum Herstellen eines Mischventils nach Anspruch 9, **dadurch gekennzeichnet, daß** Markierungen auf den Flansch aufgebracht werden, um eine zweite Platte mit Gradteilung zu bilden, und daß auf der Drehantriebswelle (61) ein Betätigungsgriff (20) mit Anzeige montiert wird, um manuell die Drehantriebswelle anzutreiben und die Position der Drehantriebswelle in Bezug zu den Gradteilungen der zweiten Platte mit Gradteilung zu erfassen.

11. Verfahren zum Herstellen eines Mischventils nach einem der Ansprüche 6 bis 8 und 10, **dadurch gekennzeichnet, daß** in der Platte (82) mit Gradteilung eine Aussparung (88) in Kreisbogenform, die auf die Mittelbohrung zentriert ist, vorgesehen wird, und daß der Betätigungsgriff (20) mit Anzeige einen Haken (90) umfaßt, der einen Anschlag bildet und in die Aussparung (88) eingreifen kann, um die Drehverschiebung des Betätigungsgriffes (20) zwischen zwei äußersten Positionen zu begrenzen, die im Wesentlichen den beiden äußersten Positionen des Maßstabs (22) der Platte (82) mit Gradteilung entsprechen.

12. Verfahren zum Herstellen eines Mischventils nach einem der Ansprüche 1 bis 11, **dadurch gekennzeichnet, daß** der Dichtring (52) einen festen Beschlag (62) mit kreisförmiger Symmetrie umfaßt, der eine äußere Seitenwand (63), erste Mittel, die eine äußere Nut (64) bilden, in die eine erste Ringdichtung (66) eingesetzt werden kann, und zweite Mittel, die eine innere Nut (68, 79) bilden, aufweist, in die mindestens eine zweite Ringdichtung (72, 74) eingesetzt werden kann, um an der Antriebswelle (61) anzuliegen, wobei der feste Beschlag (62) eine kreisförmige Aussparung (76), die in die äußere Seitenwand (63) und in die zweiten eine Nut bildenden Mittel (68) mündet, aufweist, um einen freien Raum zwischen der zweiten Ringdichtung (72, 74) und dem Äußeren der Mischkammer (48) zu bilden.

13. Mischventil, das durch ein Verfahren nach einem der Ansprüche 1 bis 12 hergestellt wird, **dadurch gekennzeichnet, daß** es einen Servomotor umfaßt, der auf den Befestigungsmitteln (26, 28, 30, 32) der Steuermittel montiert ist, um die Drehantriebswelle (61) in Drehung anzutreiben.

14. Anlage für die Zirkulation eines flüssigen Kühlmittels, **dadurch gekennzeichnet, daß** sie ein Mischventil nach Anspruch 13 umfaßt.
